# EUROPEAN PATENT SPECIFICATION

(11) **EP 1 647 321 B1**
(45) Date of publication and mention of the grant of the patent: **08.02.2017**
(21) Application number: 05022669.5
(22) Date of filing: 18.10.2005
(51) Int. Cl.: B01D 53/00

(54) **PROCESS AND APPARATUS FOR PURIFYING GASES WITH HEAT EXCHANGERS**
VERFAHREN UND VORRICHTUNG ZUR REINIGUNG VON GASEN MIT WÄRMETAUSCHERN
PROCÉDÉ ET DISPOSITIF D'ÉPURATION DE GAZ AVEC DES ÉCHANGEURS DE CHALEUR

(30) Priority: 18.10.2004 DE 102004050947
(43) Date of publication of application: 19.04.2006
(73) Proprietor: L'AIR LIQUIDE, Société Anonyme pour l'Etude et l'Exploitation des Procédés Georges Claude, 75007 Paris (FR); Air Liquide Deutschland GmbH, 40235 Düsseldorf (DE)
(72) Inventor: Kutz, Thomas, 41379 Brüggen-Born (DE); Stahl, Manfred, 47804 Krefeld (DE); Schulte, Martin, 47799 Krefeld (DE); Terkatz, Stefan, D-47807 Krefeld (DE)
(74) Representative: Rössler, Matthias

(56) References cited:
- EP-A- 0 988 879
- DE-A1- 2 924 179
- US-A- 5 483 801

## Description

The invention relates to a process for purifying gases by condensing and/or freezing out pollutants contained in the gas in accordance with the preamble of Claim 1, and to an apparatus which is suitable for carrying out the process.

In this context, the term purification of gases by condensing and/or freezing out the pollutants is to be understood in general terms as meaning the purification of waste air, exhaust gas or process gas streams, which may consist of steam, substances in vapour form or gases. In particular, this term is to be understood as also encompassing waste air streams which are relatively highly laden with solvents which may be formed, for example, in chemical processes or as flue gases from tank farms. Therefore, the term "pollutants" is also to be understood as meaning solvents, which can be reused as substances of value.

Impurities can be separated out of gases by condensation or by freezing out. The prior art for this purpose uses heat exchangers, in which the gas which is to be purified, referred to below as the "entreated gas", is brought into contact with heat exchanger surfaces, which can be of various configurations and are cooled by a cooling medium, which is referred to below as the "first cooling medium".

These heat exchangers are generally cooled by means of an intermediate circuit. The heat is dissipated from the intermediate circuit by means of a second heat exchanger, which is operated with a further cooling medium. The further cooling medium is referred to here as the "second cooling medium". To reduce the demand for the second cooling medium, the cold purified gas, which is referred to below as the "pure gas", can be used to pre-cool the waste gas which is to be purified. The pre-cooling takes place in a recuperator which is connected upstream or integrated in the first heat exchanger. Since ice can form in the apparatus through which the untreated gas flows, this apparatus has to be thawed from time to time. The thawing is effected by interrupting the supply of the second cooling medium and connecting up a heat source into the intermediate circuit (H. Grabhom and H. Herzog "Kondensationsverfahren zur Lösemittelrückgewinnung und Abgasreinigung", [Condensation process for solvent recovery and flue gas purification] WLB Wasser, Luft and Boden 06/1995). However, it is only possible to thaw the first heat exchanger which is used to condense or freeze out the pollutants. The recuperator has to be heated, for example, with external heat sources, which presents very considerable problems in particular in the case of relatively large apparatus.

EP 0 681 154 has disclosed a "cold scrub", in which substances which are to be removed from the gas that is to be purified condense by being showered with a refrigeration transfer medium. The refrigeration transfer medium is circulated through the circuit and cooled by a second cooling medium in a heat exchanger. A further heat exchanger is responsible for additional cooling of the refrigeration transfer medium by means of the cooled pure gas. In this document, the refrigeration transfer medium used is the condensate itself, which following the heat transfer is fed to a purification stage in order to be dewatered and for components which cannot be condensed to be removed. One drawback of this known prior art is that the direct contact between the condensate and the gas that is to be purified leads to the composition and therefore the cooling characteristics of the condensate changing over the course of time and constantly having to be reset. Moreover, the condensate has to be kept in liquid form throughout the entire circuit, since solidification of the condensate would lead to icing of the lines. This further restricts the temperature range in which this equipment can operate.

EP 0 839 560 B1 has disclosed a process and an apparatus for purifying gases, in which the untreated gas is purified by condensing and/or freezing out the pollutants with the aid of a first cooling medium which circulates in a circuit and for its part is cooled by a second cooling medium in a second heat exchanger, the first cooling medium being cooled with the aid of the cold pure gas in a third heat exchanger before it is fed into the first or second heat exchanger.

DE2924179 has disclosed a contaminated air cleaning process and apparatus, in which the contaminated air is cooled by heat-exchange with cooled air in a refrigeration circuit containing a compressor, heat-exchangers and expansion turbine The purified air is mixed with part of the air expanded in the turbine and fed to the refrigeration circuit.

Accordingly, the invention is based on the object of providing a process or apparatus which is such that the refrigeration of the refrigeration transfer media involved is optimally utilized, an apparatus structure which is as simple as possible is realized and particularly economical operation is made possible, while the thawing problems described above are avoided.

According to the invention, this object is achieved by the process and apparatus as described in the independent claims. Further advantageous refinements form the subject matter of the respective dependent claims.

In the process according to the invention for purifying gases, in which an untreated gas is purified by condensing and/or freezing out impurities to form a pure gas with the aid of a first stream of coolant in at least one first heat exchanger, in which process the first stream of coolant is routed separately from the untreated gas in the first heat exchanger, and the warmed first stream of coolant, after it has left the first heat exchanger, is at least partially returned to the first heat exchanger in a circuit, the pure gas is at least partially fed to the first stream of coolant.

Feeding the pure gas into the circuit of the first stream of coolant causes the refrigeration contents of the pure gas to be fed to the circuit, so that it can make a contribution to cooling the untreated gas. This is achieved in particular if the pure gas is fed straight back to the heat exchanger, on the coolant side, after it has left the first heat exchanger, with the result that a particularly compact structure is realized. In this case, coolant can be admixed directly to the pure gas on the coolant side. The separation of the untreated gas from the first coolant in the first heat exchanger widens the permissible temperature range for purification compared to cold-scrubbing processes which are known from the prior art. With this type of condensation, unlike with the known cold scrub, the process is also independent of the condensate composition, which means that the cooling characteristics are not influenced by the condensate. The pure gas is only fed to the first heat exchanger when it has been sufficiently purified to ensure that no or only small quantities of condensate can form in the circuit.

In the advantageous configuration of the invention, the first stream of coolant is routed through at least one second heat exchanger in the circuit, the second heat exchanger being cooled by a second stream of coolant which is liquid nitrogen. This measure achieves particularly good controllability of the temperature and/or the required cooling of the first stream of coolant. It is expedient for ice to be formed only in the heat exchangers for the untreated gas or for the pure gas which is to be purified in a further purification stage. However, it is not always possible to rule out ice also being precipitated in the circuit. If ice forms in the circuit, it should preferably form at the location of the second heat exchanger, since targeted and therefore particularly effective de-icing measures can be taken particularly easily at this location.

Furthermore, it is advantageous if the first stream of coolant is routed through a third heat exchanger in the circuit, the third heat exchanger being cooled by the second stream of coolant from the second heat exchanger. This two-stage utilization of the second stream of coolant allows particularly efficient utilization of the refrigeration content of the second stream of coolant, in particular if the second stream of coolant fed to the second heat exchanger in the liquid phase (i.e. liquid nitrogen) comes gaseous through warming. The second and third heat exchangers can be matched to the fluid-dynamic properties of the liquid or gaseous phase of the second stream of coolant.

In one particular configuration of the invention, the pure gas is purified further with the aid of a third stream of coolant in at least one fourth heat exchanger. This second purification stage can be used to remove remaining impurities which are difficult to condense from the pure gas. This is of particular importance in view of the background of stringent waste gas standards. The second purification stage allows adjustment during condensation. In particular, the design configuration of the fourth heat exchanger can be adapted. This also allows special adjustment with regard to the choice of coolant used and/or its thermodynamic variables, such as temperature, pressure and/or phase.

In one particular refinement, the third stream of coolant from the fourth heat exchanger is fed to the second stream of coolant, in particular to the second stream of coolant from the second heat exchanger, and/or to the first stream of coolant. This allows utilization of at least some of the refrigeration content which remains in the third stream of coolant from the fourth heat exchanger. This is advantageous since the third stream of coolant is at a similarly cold temperature to the pure gas before it enters the fourth heat exchanger, i.e. considerable quantities of refrigeration are still contained in the third stream of coolant.

It is advantageous for the untreated gas to be subjected to a primary condensation. The primary condensation in particular removes a water content from the untreated gas, which could otherwise lead to icing in the first heat exchanger. For this purpose, the untreated gas is expediently cooled to a temperature of from 0.1°C to 2°C, in particular to +1°C. The primary condensation can be effected with the aid of a standard refrigerating machine with a separate, closed coolant circuit, but can also be effected by utilizing residual refrigeration from the first stream of coolant, second stream of coolant and/or third stream of coolant. With a view to economic aspects, it is particularly advantageous if a refrigeration content of at least part of the first stream of coolant, second stream of coolant and/or third stream of coolant is used for the primary condensation.

In one specific configuration of the invention, part of the heated first stream of coolant from the circuit is removed from the circuit downstream of a delivery means (e.g. blower/compressor) located in the circuit for delivering the first stream of coolant and upstream of the first heat exchanger. It is in principle advantageous to compensate for the excess of coolant in the circuit, which is formed as a result of the pure gas being fed to the circuit, at a location where the first stream of coolant has not yet been cooled or is not yet being cooled. In particular, the removal should be effected downstream of the first heat exchanger and upstream of the cooling with the pure gas or with a second or third cooling medium. This results in a relatively low incidence of heat resulting from heat loss from the delivery means and therefore a lower overall consumption of coolant. If the excess is removed from the circuit upstream of the delivery means, as seen in the direction of flow, the compressor or blower only has to deliver part of the first stream of coolant, which has a positive effect on the energy balance when the installation is operating; in practice, this allows the quantitative delivery of the blower or compressor to be reduced by 40 to 90%. However, for control engineering reasons, it is particularly advantageous for the excess of the first stream of coolant to be compensated for downstream of the delivery means located in the circuit.

In the process, the cooling medium of the second and preferably also of the third stream of coolant is liquid nitrogen. Nitrogen has a relatively high heat capacity both in the liquid phase and in the gas phase, making it eminently suitable for use as a coolant. As an inert gas, it also has operational safety benefits.

In the apparatus according to the invention for purifying an untreated gas to form a pure gas by condensing and/or freezing out impurities with the aid of at least one heat exchanger, which is assigned at least one inlet line for the untreated gas and at least one outlet line for the cold pure gas, and, separated therefrom in terms of flow, at least one inlet line and at least one outlet line for a first stream of coolant, the outlet line for the first stream of coolant is at least partially flow-connected to the inlet line for the first stream of coolant to form a circuit, and in which apparatus the outlet line for the cold pure gas is in fluid-carrying communication with the inlet line for the first stream of coolant.

This structure of the apparatus makes it possible to make use of the refrigeration content of the cold pure gas, allowing the gas purification to operate particularly economically. Whereas the untreated gas is not mixed with the coolant in the first heat exchanger for condensing out impurities, it is only fed to the first heat exchanger on the coolant side in purified form, namely as the pure gas. The advantage of this is that it is impossible for any impurities to enter the circuit for the first stream of coolant; were they to do so, they would have to be removed in an expensive and complex way. It is in principle advantageous if the pure gas firstly leaves the first heat exchanger and is then fed back to it, since the pure gas can be subjected to a further treatment, in particular a second purification stage, between emerging from the first heat exchanger and re-entering it on the coolant side. However, it is also possible for the pure gas to be fed straight back to the coolant side of the first heat exchanger as soon as it leaves the first heat exchanger, if it has been ensured that the untreated gas which has been purified is sufficiently pure not to contribute to the formation of ice on the coolant side or to excessively contaminate the first stream of coolant. Should ice nevertheless form in the circuit, the ice can be removed from the coolant circuit by heating the first stream of coolant in the circuit. It is advantageous for the impurities in ice form to be carefully thawed in order to enable them to melt and be discharged via condensate lines without forming particularly large quantities of gas.

Furthermore, at least one second heat exchanger for cooling the first stream of coolant by means of a second stream of coolant (i.e. liquid nitrogen) is arranged in the circuit.

The cooling of the first stream of coolant can be controlled by the second heat exchanger. Should ice form on the second heat exchanger in the circuit, the ice can be removed by warming. For this purpose, the circuit is closed, so that it is impossible for any impurities to enter it from the outside. Slow warming causes the ice to change into a liquid phase so that it can flow out via lines via a condensate outflow.

In one specific configuration, at least one third heat exchanger for cooling the first stream of coolant by means of a second stream of coolant from the second heat exchanger is arranged in the circuit. The efficiency of cooling by the second stream of coolant can be increased by two-stage cooling of the first stream of coolant, which is particularly advantageous if the coolant of the second stream of coolant changes state. This makes the installation as a whole more efficient.

In one particular configuration, the apparatus has at least one fourth heat exchanger for further purifying the pure gas, the fourth heat exchanger having at least one inlet line and at least one outlet line for a third stream of coolant. A further purification may be required for particularly volatile constituents of the untreated gas which cannot or cannot sufficiently be removed from the untreated gas by the first purification stage and are at that stage still present in the pure gas. The second purification stage may be advantageous given the increasingly stringent waste gas standards.

It is advantageous for the outlet line of the fourth heat exchanger for the third stream of coolant to be flow-connected to the second and/or third heat exchanger, with the result that the third stream of coolant is at least partially fed to the second stream of coolant. This allows the residual refrigeration content of the third stream of coolant to be utilized. This is particularly expedient if the third stream of coolant and the second stream of coolant contain the same coolant.

In one particular configuration of the invention, to at least partially feed the third stream of coolant to the first stream of coolant, the outlet line of the fourth heat exchanger for the third stream of coolant is flow-connected to the circuit. In this case too, a residual refrigeration content can be utilized and the economics of the apparatus can be improved.

It is advantageous for the apparatus to have a primary condensation for the untreated gas. The primary condensation removes readily condensable constituents in the untreated gas, such as for example water, from the untreated gas, with the result that the risk of ice forming in the first heat exchanger is removed and the required maintenance intervals (maximum operating time until cleaning is required) of the first heat exchanger are lengthened.

Refrigeration contents that have been hitherto unutilized in the apparatus are advantageously exploited in the primary condensation. In particular, the apparatus has a fluid-carrying connection for at least part of the first stream of coolant, second stream of coolant and/or third stream of coolant to the primary condensation. The primary condensation can make use of even relatively minor temperature differences between the stream of coolant and that of the untreated gas.

Advantageously, the circuit includes a gas discharge and a delivery means, in particular a blower or a compressor, the gas discharge in the circuit being arranged downstream of the delivery means and upstream of the first heat exchanger. Although it is advantageous in economic terms for the gas to be discharged even upstream of the delivery means, since the delivery means then only has to deliver part of the first stream of coolant, namely the actual circulating stream, and not the waste gas stream which has been removed from the circuit, because then the work performed on the gas by the delivery means is restricted to a considerably smaller stream of coolant, control of the pressure conditions in the circuit is simpler and more reliable if the removal of gas takes place on the pressure side of the delivery means.

Further advantages and particular configurations are explained on the basis of the following drawing, which is not intended to restrict the invention, but rather merely to provide an illustration of an example thereof.

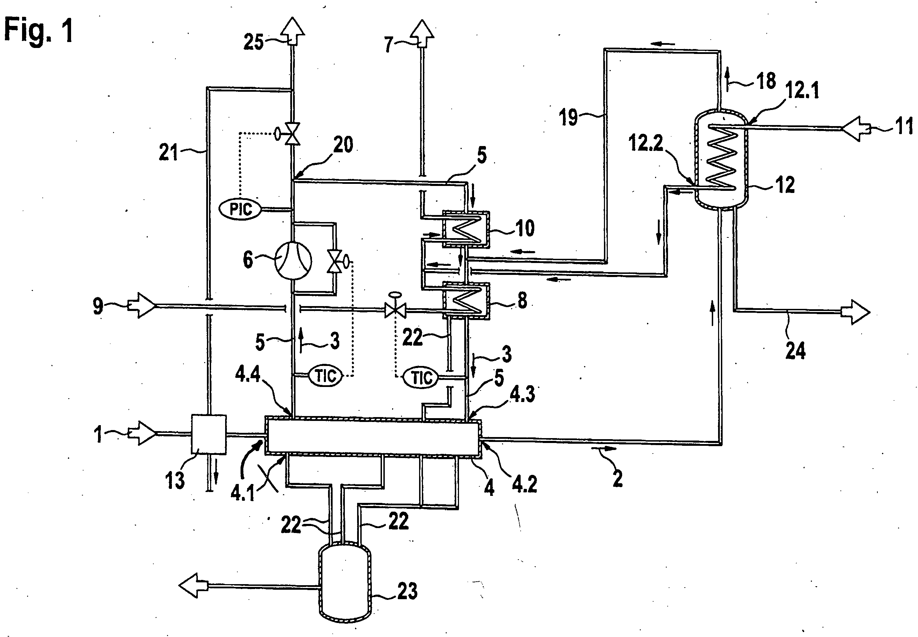

The drawing diagrammatically depicts an apparatus according to the invention for purifying an untreated gas 1 as is used at large tank farms. Impurities are separated out of the untreated gas 1 by condensation and/or freezing in two stages. Prior to this separation, a water content in the untreated gas is reduced with the aid of a primary condensation 13, in order to avoid icing in the downstream heat exchangers 4, 12, 8, 10. In a first purification stage, the untreated gas 1 from which the water has been removed is fed to a first heat exchanger 4, which is cooled by a first stream of coolant 3. The untreated gas 1, i.e. the untreated gas stream, and the first stream of coolant 3 are passed separately over heat exchange surfaces in the first heat exchanger 4; at these heat exchange surfaces, the first stream of coolant 3 releases its refrigeration content to the untreated gas 1. At least some of the impurities condense or freeze on the untreated gas side to form a condensate which is fed to a condensate tank 23 by first condensate lines 22. The condensation or freezing or resublimation purifies the untreated gas 1, so that it leaves the first heat exchanger 4 as pure gas 2. The pure gas 2 is then purified further in a second purification stage with the aid of a fourth heat exchanger 12, in order also for particularly volatile impurities, such as for example short-chain hydrocarbons, to be separated off. These constituents are discharged via a second condensate line 24. The fourth heat exchanger 12 has at least one inlet line 12.1 and at least one outlet line 12.2 for a third stream of coolant 11, with the aid of which the pure gas 2, advantageously in countercurrent mode, is cooled further. In this case too, the third stream of coolant 11 is routed separately in terms of flow from the pure gas 2. Whereas during the primary condensation 13 the untreated gas 1 is cooled to approx. +1°C, the temperature of the pure gas 2 downstream of the first heat exchanger 4 is from -130° to -100°C, and the temperature of the purified pure gas 18 downstream of the fourth heat exchanger 12 is from -160° to -140°C. In the first heat exchanger 4, the first stream of coolant 3 warms up to a temperature of from-20°C to 0°C, in particular to approx. -10°C.

The first heat exchanger 4 has an inlet line 4.1 for the untreated gas 1, an outlet line 4.2 for the cold pure gas 2, an inlet line 4.3 for the first stream of coolant 3 and an outlet line 4.4 for the first stream of coolant 3. The first stream of coolant 3 is at least partially connected to form a circuit 5 with respect to the first heat exchanger 4. The circuit 5 is formed by the first heat exchanger 4, a delivery means 6 (e.g. in the form of a blower or compressor) for delivering the first stream of coolant 3 in the circuit 5, a second heat exchanger 8 and a third heat exchanger 10. The second heat exchanger 8 is used to cool the first stream of coolant 3 with the aid of a second stream of coolant 9. The coolant used for the second stream of coolant 9 is liquid nitrogen, which passes into the gaseous phase as it flows through the second heat exchanger 8. The second stream of coolant 9, originating from the second heat exchanger 8, is fed to a third heat exchanger 10 in order to make still further use of the refrigeration content in the gas phase. It is expedient for the third heat exchanger 10 to be positioned upstream of the second heat exchanger 8 with respect to the first stream of coolant 3. After it has emerged from the third heat exchanger 10, the second stream of coolant 9, which at this point is at a temperature of from-20°C to 0°C, is blown off as waste gas 7; it can therefore also be utilized during the primary condensation 13 (not shown).

The cold purified pure gas 18 is fed to the circuit 5 via a fluid-carrying connection 19 and combined with the first stream of coolant 3. As a result, the entire refrigeration content of the purified pure gas 18 is transferred to the first stream of coolant 3, with the result that the first stream of coolant 3 is cooled considerably. This measure allows the total consumption of coolant, which is composed of the first stream of coolant 3, second stream of coolant 9 and third stream of coolant 11, to be reduced by up to 50% compared to an apparatus in which the refrigeration content of the purified pure gas 18 is not utilized.

Arranging a gas outlet 20 downstream of the delivery means 6 and upstream of the third heat exchanger 10 or second heat exchanger 8 allows particularly reliable control of the pressure conditions in the circuit 5. At the location of the gas outlet 20, the stream of coolant 3 is relatively warm (between 0°C and +20°C). Upstream of the delivery means 6, the temperature of the first stream of coolant is between - 20°C and 0°C. the increase in temperature results from the increase in pressure in the first stream of coolant 3 effected by the delivery means 6. That part of the first stream of coolant 3 which is removed from the circuit 5 is discharged as waste air 25. A part-stream of this part can be fed via a fluid-carrying connection 21 to the primary condensation 13, in order to be used there for the precooling of the untreated gas 1. If ice forms in the second heat exchanger 8, the ice can be converted into liquid form by warming of the first stream of coolant 3, allowing the condensate formed to flow out via the first condensate lines 22.

The invention relates to a process for purifying gases, as defined in claim 1, in which an untreated gas 1 is purified by condensing and/or freezing out impurities to form a pure gas 2 with the aid of a first stream of coolant 3 in at least one first heat exchanger 4, in which process the first stream of coolant 3 is routed separately from the untreated gas 1 in the first heat exchanger 4, and the warmed first stream of coolant 3, after it has left the first heat exchanger 4, is at least partially returned to the first heat exchanger 4 in a circuit 5, in which process the pure gas 2 is at least partially fed to the first stream of coolant 3, and to an apparatus for carrying out the process as defined in claim 9. The invention is distinguished by being highly economical combined with a relatively simple structure in terms of apparatus, with thawing problems being avoided at the same time.

### List of designations

- 1: Untreated gas
- 2: Pure gas
- 3: First stream of coolant
- 4: First heat exchanger
- 4.1: Inlet line of the first heat exchanger 4 for the untreated gas 1
- 4.2: Outlet line of the first heat exchanger 4 for the cold pure gas 2
- 4.3: Inlet line of the first heat exchanger 4 for the first stream of coolant 3
- 4.4: Outlet line of the first heat exchanger 4 for the first stream of coolant 3
- 5: Circuit
- 6: Delivery means
- 7: Waste gas
- 8: Second heat exchanger
- 9: Second stream of coolant
- 10: Third heat exchanger
- 11: Third stream of coolant
- 12: Fourth heat exchanger
- 12.1: Inlet line of the fourth heat exchanger 12 for the third stream of coolant 11
- 12.2: Outlet line of the fourth heat exchanger 12 for the third stream of coolant 11
- 13: Primary condensation
- 17: Coolant reservoir
- 18: Purified pure gas
- 19: Fluid-carrying connection
- 20: Gas outlet
- 21: Fluid-carrying connection for at least part of at least one of the streams of coolant 3, 9, 11
- 22: First condensate lines
- 23: Condensate tank
- 24: Second condensate line
- 25: Waste air

## Claims

1. Process for purifying gases, in which an untreated gas (1) is purified by condensing and/or freezing out impurities to form a pure gas (2) with the aid of a first stream of coolant (3) in at least one first heat exchanger (4),
in which process the first stream of coolant (3) is routed separately from the untreated gas (1) in the first heat exchanger (4), and the warmed first stream of coolant (3), after it has left the first heat exchanger (4), is at least partially returned to the first heat exchanger (4) in a circuit (5) through at least one second heat exchanger (8) in the circuit (5), the second heat exchanger (8) being cooled by a second stream of coolant (9),
and in which process the pure gas (2) is at least partially fed to the first stream of coolant (3),
**characterized in that**
the second stream of coolant (9) is liquid nitrogen .

2. Process according to Claim 1, **characterized in that** the first stream of coolant (3) is routed through a third heat exchanger (10) in the circuit (5), the third heat exchanger (10) being cooled by the second stream of coolant (9) from the second heat exchanger (8).

3. Process according to claim 1 or 2, **characterized in that** the pure gas (2) is purified further with the aid of a third stream of coolant (11) in at least one fourth heat exchanger (12).

4. Process according to Claim 3, **characterized in that** the third stream of coolant (11) from the fourth heat exchanger (12) is fed to the second stream of coolant (9), in particular to the second stream of coolant (9) from the second heat exchanger (8), and/or to the first stream of coolant (3).

5. Process according to one of the claims 3 or 4, **characterized in that** the cooling medium of the third stream of coolant (11) is liquid nitrogen.

6. Process according to one of the preceding claims, **characterized in that** the untreated gas (1) is subjected to a primary condensation (13).

7. Process according to Claim 6, **characterized in that** a refrigeration content of at least part of the first stream of coolant (3), second stream of coolant (9) and/or third stream of coolant (11) is utilized for the primary condensation (13).

8. Process according to one of the preceding claims, **characterized in that** part of the warmed first stream of coolant (3) from the circuit (5) is removed from the circuit (5) downstream of a delivery means (6) located in the circuit (5) and upstream of the first heat exchanger (4).

9. Apparatus for purifying an untreated gas (1) to form a pure gas (2) by condensing and/or freezing out impurities with the aid of at least one heat exchanger (4), which is assigned
at least one inlet line (4.1) for the untreated gas (1) and at least one outlet line (4.2) for the cold pure gas (2), and, separated therefrom in terms of flow,
at least one inlet line (4.3) and at least one outlet line (4.4) for a first stream of coolant (3),
in which apparatus
the outlet line (4.4) for the first stream of coolant (3) is at least partially flow-connected to the inlet line (4.3) for the first stream of coolant (3) to form a circuit (5), in which apparatus
the outlet line (4.2) for the cold pure gas (2) is in fluid-carrying communication (19) with the inlet line (4.3) for the first stream of coolant (3),
and in which apparatus
at least one second heat exchanger (8) for cooling the first stream of coolant (3) by means of a second stream of coolant (9) is arranged in the circuit (5),
**characterized in that** the second stream of coolant (9) is liquid nitrogen.

10. Apparatus according to Claim 9, **characterized in that** at least one third heat exchanger (10) for cooling the first stream of coolant (3) by means of a second stream of coolant (9) from the second heat exchanger (8) is arranged in the circuit (5).

11. Apparatus according to one of Claims 9 or 10, **characterized by** at least one fourth heat exchanger (12) for further purifying the pure gas (2), the fourth heat exchanger (12) having at least one inlet line (12.1) and at least one outlet line (12.2) for a third stream of coolant (11).

12. Apparatus according to Claim 11, **characterized in that**, for the third stream of coolant (11) to be at least partially fed to the second stream of coolant, the outlet line (12.2) of the fourth heat exchanger (12) for the third stream of coolant (11) is flow-connected to the second heat exchanger (8) and/or the third heat exchanger (10).

13. Apparatus according to Claim 11 or 12, **characterized in that**, to at least partially feed the third stream of coolant (11) to the first stream of coolant (3), the outlet line (12.2) of the fourth heat exchanger (12) for the third stream of coolant (11) is flow-connected to the circuit (5).

14. Apparatus according to one of Claims. 9 to 13, **characterized by** a primary condensation (13) for the untreated gas (1).

15. Apparatus according to Claim 14, **characterized by** a fluid-carrying connection (21) for at least part of the first stream of coolant (3), second stream of coolant (9) and/or third stream of coolant (11) to the primary condensation (13).

16. Apparatus according to one of Claims 9 to 14, **characterized in that** the circuit (5) includes a gas discharge (20) and a delivery means (6), the gas discharge (20) in the circuit (5) being arranged downstream of the delivery means (6) and upstream of the first heat exchanger (4).

## Patentansprüche

1. Verfahren zum Reinigen von Gasen, wobei ein unbehandeltes Gas (1) durch Kondensieren und/oder Ausfrieren von Verunreinigungen gereinigt wird, um mit Hilfe eines ersten Stroms von Kühlmittel (3) in mindestens einem ersten Wärmetauscher (4) ein reines Gas (2) zu erzeugen,
wobei in dem Verfahren der erste Strom von Kühlmittel (3) separat von dem unbehandelten Gas in den ersten Wärmetauscher (4) geleitet wird und der erwärmte erste Strom von Kühlmittel (3), nachdem er den ersten Wärmetauscher (4) verlassen hat, mindestens teilweise in den ersten Wärmetauscher (4) in einem Kreislauf (5) durch mindestens einen zweiten Wärmetauscher (8) in den Kreislauf (5) zurückgeleitet wird, wobei der zweite Wärmetauscher (8) durch einen zweiten Strom von Kühlmittel (9) gekühlt wird, und wobei in dem Verfahren das reine Gas (2) mindestens teilweise dem ersten Strom von Kühlmittel (3) zugeführt wird,
**dadurch gekennzeichnet, dass**
der zweite Strom von Kühlmittel (9) flüssiger Stickstoff ist.

2. Verfahren nach Anspruch 1, **dadurch gekennzeichnet, dass** der erste Strom von Kühlmittel (3) in dem Kreislauf (5) durch einen dritten Wärmetauscher (10) geleitet wird und der dritte Wärmetauscher (10) durch den zweiten Strom von Kühlmittel (9) aus dem zweiten Wärmetauscher (8) gekühlt wird.

3. Verfahren nach Anspruch 1 oder 2, **dadurch gekennzeichnet, dass** das reine Gas (2) mit Hilfe eines dritten Stroms von Kühlmittel (11) in mindestens einem vierten Wärmetauscher (12) weiter gereinigt wird.

4. Verfahren nach Anspruch 3, **dadurch gekennzeichnet, dass** der dritte Strom von Kühlmittel (11) aus dem vierten Wärmetauscher (12) dem zweiten Strom von Kühlmittel (9) und speziell dem zweiten Strom von Kühlmittel (9) aus dem zweiten Wärmetauscher (8) und/oder dem ersten Strom von Kühlmittel (3) zugeführt wird.

5. Verfahren nach einem der Ansprüche 3 oder 4, **dadurch gekennzeichnet, dass** das Kühlmedium des dritten Stroms von Kühlmittel (11) flüssiger Stickstoff ist.

6. Verfahren nach einem der vorgenannten Ansprüche, **dadurch gekennzeichnet, dass** das unbehandelte Gas (1) einer primären Kondensation (13) unterworfen wird.

7. Verfahren nach Anspruch 6, **dadurch gekennzeichnet, dass** für die primäre Kondensation (13) ein Kältemittelgehalt mindestens als Teil des ersten Stroms von Kühlmittel (3), des zweiten Stroms von Kühlmittel (9) und/oder des dritten Stroms von Kühlmittel (13) eingesetzt wird.

8. Verfahren nach einem der vorgenannten Ansprüche, **dadurch gekennzeichnet, dass** ein Teil des erwärmten ersten Stroms von Kühlmittel (3) von dem Kreislauf (5) aus dem Kreislauf (5) stromabwärts eines in dem Kreislauf (5) befindlichen Mittels zum Zuführen (6) und dem ersten Wärmetauscher (4) vorgeschaltet entfernt wird.

9. Vorrichtung zum Reinigen von unbehandeltem Gas (1), um durch Kondensieren und/oder Ausfrieren von Verunreinigungen mit Hilfe mindestens eines Wärmetauschers (4) ein reines Gas (2) zu erzeugen, dem zugeordnet ist:
mindestens eine Einlassleitung (4.1) für das unbehandelte Gas (1) sowie mindestens eine Ausgangsleitung (4.2) für das kalte reine Gas (2), und, strömungstechnisch davon getrennt,
mindestens eine Einlassleitung (4.3) und mindestens eine Ausgangsleitung (4.4) für einen ersten Strom von Kühlmittel (3);
wobei in der Vorrichtung
die Ausgangsleitung (4.4) für den ersten Strom von Kühlmittel (3) mindestens zum Teil mit der Einlassleitung (4.3) für den ersten Strom von Kühlmittel (3) in Strömungsverbindung steht, um einen Kreislauf (5) zu erzeugen, wobei in dem Vorrichtung
die Ausgangsleitung (4.2) für das kalte reine Gas (2) in fluidführender Verbindung (19) mit der Einlassleitung (4.3) für den ersten Strom von Kühlmittel (3) steht,
und wobei in dem Vorrichtung
mindestens ein zweiter Wärmetauscher (8) zum Kühlen des ersten Stroms von Kühlmittel (3) mit Hilfe eines zweiten Stroms von Kühlmittel (9) in dem Kreislauf (5) angeordnet ist,
**dadurch gekennzeichnet, dass**
der zweite Strom von Kühlmittel (9) flüssiger Stickstoff ist.

10. Vorrichtung nach Anspruch 9, **dadurch gekennzeichnet, dass** mindestens ein dritter Wärmetauscher (10) zum Kühlen des ersten Stroms von Kühlmittel (3) mit Hilfe eines zweiten Stroms von Kühlmittel (9) aus dem zweiten Wärmetauscher (8) in dem Kreislauf (5) angeordnet ist.

11. Vorrichtung nach einem der Ansprüche 9 oder 10, **gekennzeichnet durch** mindestens einen vierten Wärmetauscher (12) zum weiteren Reinigen des reinen Gases (2), wobei der vierte Wärmetauscher (12) mindestens eine Einlassleitung (12.1) und mindestens eine Auslassleitung (12.2) für einen dritten Strom von Kühlmittel (11) hat.

12. Vorrichtung nach Anspruch 11, **dadurch gekennzeichnet, dass**, damit der dritte Strom von Kühlmittel (11) mindestens teilweise dem zweiten Strom von Kühlmittel zugeführt wird, die Auslassleitung (12.2) des vierten Wärmetauschers (12) für den dritten Strom von Kühlmittel (11) in Strömungsverbindung mit dem zweiten Wärmetauscher (8) und/oder dem dritten Wärmetauscher (10) steht.

13. Vorrichtung nach Anspruch 11 oder 12, **dadurch gekennzeichnet, dass**, um mindestens teilweise den dritten Strom von Kühlmittel (11) dem ersten Strom von Kühlmittel (3) zuzuführen, die Auslassleitung (12.2) des vierter Wärmetauschers (12) für den dritten Strom von Kühlmittel (11) in Strömungsverbindung mit dem Kreislauf (5) steht.

14. Vorrichtung nach Anspruch 9 bis 13, **gekennzeichnet durch** eine primäre Kondensation (13) für das unbehandelte Gas (1).

15. Vorrichtung nach Anspruch 14, **gekennzeichnet durch** eine fluidführende Verbindung (21) für mindestens einen Teil des ersten Stroms von Kühlmittel (3), des zweiten Stroms von Kühlmittel (9) und/oder des dritten Stroms von Kühlmittel (11) zur primären Kondensation (13).

16. Vorrichtung nach einem der Ansprüche 9 bis 14, **dadurch gekennzeichnet, dass** der Kreislauf (5) einen Gasaustrag (20) und Mittel zum Zuführen (6) einschließt, wobei der Gasaustrag (20) in dem Kreislauf (5) stromabwärts der Vorrichtung zum Zuführen (6) und stromaufwärts des ersten Wärmetauschers (4) angeordnet ist.

## Revendications

1. Procédé de purification de gaz, dans lequel un gaz non traité (1) est purifié par condensation et/ou par refroidissement d'impuretés pour former un gaz pur (2) avec l'aide d'un premier flux de réfrigérant (3) dans au moins un premier échangeur de chaleur (4),
procédé au cours duquel le premier flux de réfrigérant (3) est acheminé séparément du gaz non traité (1) dans le premier échangeur de chaleur (4), et où le premier flux réchauffé de réfrigérant (3), une fois qu'il a quitté le premier échangeur de chaleur (4), est au moins en partie renvoyé au premier échangeur de chaleur (4) dans un circuit (5) à travers au moins un deuxième échangeur de chaleur (8) dans le circuit (5), le deuxième échangeur de chaleur (8) étant refroidi par un deuxième flux de réfrigérant (9),
et procédé au cours duquel le gaz pur (2) est au moins en partie introduit dans le premier flux de réfrigérant (3),
**caractérisé en ce que** le deuxième flux de réfrigérant (9) est de l'azote liquide.

2. Procédé selon la revendication 1, **caractérisé en ce que** le premier flux de réfrigérant (3) est acheminé à travers un troisième échangeur de chaleur (10) dans le circuit (5), le troisième échangeur de chaleur (10) étant refroidi par le deuxième flux de réfrigérant (9) à partir du deuxième échangeur de chaleur (8).

3. Procédé selon la revendication 1 ou 2, **caractérisé en ce que** le gaz pur (2) est encore purifié à l'aide d'un troisième flux de réfrigérant (11) dans au moins un quatrième échangeur de chaleur (12).

4. Procédé selon la revendication 3, **caractérisé en ce que** le troisième flux de réfrigérant (11) issu du quatrième échangeur de chaleur (12) est introduit dans le deuxième flux de réfrigérant (9), en particulier dans le deuxième flux de réfrigérant (9) à partir du deuxième échangeur de chaleur (8) et/ou du premier flux de réfrigérant (3).

5. Procédé selon l'une des revendications 3 ou 4, **caractérisé en ce que** le milieu de refroidissement du troisième flux de réfrigérant (11) est de l'azote liquide.

6. Procédé selon l'une des revendications précédentes, **caractérisé en ce que** le gaz non traité (1) est soumis à une condensation primaire (13).

7. Procédé selon la revendication 6, **caractérisé en ce qu'**une part de réfrigération d'au moins une partie du premier flux de réfrigérant (3), du deuxième flux de réfrigérant (9) et/ou du troisième flux de réfrigérant (11) est utilisée pour la condensation primaire (13).

8. Procédé selon l'une des revendications précédentes, **caractérisé en ce qu'**une partie du premier flux réchauffé de réfrigérant (3) provenant du circuit (5) est éliminée du circuit (5) en aval d'un moyen d'alimentation (6) situé dans le circuit (5) et en amont du premier échangeur de chaleur (4).

9. Appareil de purification d'un gaz non traité (1) pour former un gaz pur (2) par condensation et/ou refroidissement d'impuretés avec l'aide d'au moins un échangeur de chaleur (4), auquel est attribuée au moins une ligne d'entrée (4.1) pour le gaz non traité (1) et au moins une conduite de sortie (4.2) destinée au gaz pur froid (2) et séparé de celui-ci en termes de flux,
au moins une conduite d'entrée (4.3) et au moins une conduite de sortie (4.4) pour un premier flux de réfrigérant (3),
appareil dans lequel la conduite de sortie (4.4) destinée au premier flux de réfrigérant (3) est au moins partiellement raccordée fluidiquement à la conduite d'entrée (4.3) pour le premier flux de réfrigérant (3) pour former un circuit (5), appareil dans lequel
la conduite de sortie (4.2) destinée au gaz froid pur (2) est en communication de portage de fluide (19) avec la conduite d'entrée (4.3) pour le premier flux de réfrigérant (3),
et appareil dans lequel au moins un deuxième échangeur de chaleur (8) servant à refroidir le premier flux de réfrigérant (3) au moyen d'un deuxième flux de réfrigérant (9) est disposé dans le circuit (5),
**caractérisé en ce que** le deuxième flux de réfrigérant (9) est de l'azote liquide.

10. Appareil selon la revendication 9, **caractérisé en ce qu'**au moins un tiers de l'échangeur de chaleur (10) servant à refroidir le premier flux de réfrigérant (3) au moyen d'un deuxième flux de réfrigérant (9) à partir du deuxième échangeur de chaleur (8) est disposé dans le circuit (5).

11. Appareil selon la revendication 9 ou 10, **caractérisé par** l'au moins un quatrième échangeur de chaleur (12) pour encore purifier le gaz pur (2), le quatrième échangeur de chaleur (12) comportant au moins une conduite d'entrée (12.1) et au moins une conduite de sortie (12.2) pour un troisième flux de réfrigérant (11).

12. Appareil selon la revendication 11, **caractérisé en ce que**, pour que le troisième flux de réfrigérant (11) soit au moins en partie introduit dans le deuxième flux de réfrigérant, la conduite de sortie (12.2) du quatrième échangeur de chaleur (12) pour le troisième flux de réfrigérant (11) est raccordé pour le flux au deuxième échangeur de chaleur (8) et/ou au troisième échangeur de chaleur (10).

13. Appareil selon la revendication 11 ou 12, **caractérisé en ce que**, pour alimenter au moins partiellement le troisième flux de réfrigérant (11) vers le premier flux de réfrigérant (3), la conduite de sortie (12.2) du quatrième échangeur de chaleur (12) pour le troisième flux de réfrigérant (11) est raccordé fluidiquement au circuit (5).

14. Appareil selon l'une des revendications 9 à 13, **caractérisé par** une condensation primaire (13) pour le gaz non traité (1).

15. Appareil selon la revendication 14, **caractérisé par** un raccordement porteur de fluide (21) pour au moins une partie du premier flux de réfrigérant (3), un deuxième flux de réfrigérant (9) et/ou un troisième flux de réfrigérant (11) vers la condensation primaire (13).

16. Appareil selon l'une des revendications 9 à 14, **caractérisé en ce que** le circuit (5) contient un moyen d'évacuation de gaz (20) et un moyen d'alimentation (6), le moyen d'évacuation de gaz (20) présent dans le circuit (5) étant disposé en aval du moyen d'alimentation (6) et en amont du premier échangeur de chaleur (4).
